(19) **Europäisches Patentamt / European Patent Office / Office européen des brevets**

(11) **EP 4 682 646 B1**

(12) **EUROPEAN PATENT SPECIFICATION**

(45) Date of publication and mention of the grant of the patent:
**01.07.2026 Bulletin 2026/27**

(21) Application number: **24306211.4**

(22) Date of filing: **18.07.2024**

(51) International Patent Classification (IPC):
**G05B 13/02** $^{(2006.01)}$    **C03B 5/24** $^{(2006.01)}$

(52) Cooperative Patent Classification (CPC):
**G05B 13/02; C03B 5/24;** G05B 2219/13095;
G05B 2219/2635; G05B 2219/45009

(54) **METHOD AND SYSTEM FOR CONTROLLING A COLD TOP GLASS MELTING ELECTRIC FURNACE**

VERFAHREN UND SYSTEM ZUR STEUERUNG EINES KALTDECKEL-ELEKTRO-GLAS-SCHMELZOFENS

PROCÉDÉ ET SYSTÈME DE COMMANDE D'UN FOUR ÉLECTRIQUE DE FUSION DU VERRE À COUVERCLE FROID

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**21.01.2026 Bulletin 2026/04**

(73) Proprietor: **Saint-Gobain Isover**
**92400 Courbevoie (FR)**

(72) Inventors:
- **BARBA ROSSA, Guillaume**
  **92400 Courbevoie (FR)**
- **BOUSQUET, David**
  **92400 Courbevoie (FR)**

(74) Representative: **Saint-Gobain Recherche**
**41 Quai Lucien Lefranc**
**93300 Aubervilliers (FR)**

(56) References cited:
WO-A1-2022/242843    US-A- 4 149 022
US-A- 4 262 158    US-A- 4 718 931

- REYNOLDS A: "ELECTRIC MELTING OF CRYSTAL GLASS", POWER ENGINEERING JOURNAL, INSTITUTION OF ELECTRICAL ENGINEERS, HITCHIN, GB, vol. 3, no. 5, 1 September 1989 (1989-09-01), pages 281 - 288, XP000083686, ISSN: 0950-3366

- ODA KENJI: "Mathematical modelling of batch melting process in cold-top electric furnace", vol. 130, no. 8, 1 August 2022 (2022-08-01), Tokyo, JP, pages 701 - 706, XP093236479, ISSN: 1882-0743, Retrieved from the Internet <URL:https://www.jstage.jst.go.jp/article/jcersj2/130/8/130_22068/_pdf> [retrieved on 20250103], DOI: 10.2109/jcersj2.22068

- ODA KENJI ET AL: "OSCILLATION OF THE GLASS FLOW IN A COLD-TOP ALL ELECTRIC MELTER", 27 November 2023 (2023-11-27), CZ, pages 477 - 485, XP093236480, ISSN: 0862-5468, Retrieved from the Internet <URL:https://www2.irsm.cas.cz/materialy/cs_content/2023_doi/Oda_CS_2023_0057.pdf> [retrieved on 20250103], DOI: 10.13168/cs.2023.0057

- ANONYMOUS: "Viscosity - Wikipedia", 19 September 2012 (2012-09-19), XP055574577, Retrieved from the Internet <URL:https://en.wikipedia.org/w/index.php?title=Viscosity&oldid=513507624#Viscosity_measurement> [retrieved on 20190326]

EP 4 682 646 B1

## Description

### Field of the Invention

The present invention relates to the general field of manufacturing glass. More particularly, it relates to a method for controlling a cold top glass melting electric furnace. It also relates to a control system configured to perform such a control method.

### Technical Background

In the present description, "raw materials" refers to all materials, natural minerals or synthesised products, materials from recycling of the cullet type etc., which may be included in the composition (still referred to as "batch") used in a furnace designed for the manufacture of glass.

Similarly, "glass" refers to glass in the broad sense, i.e. including any material with a vitreous, glass-ceramic or ceramic matrix.

In addition, the term "manufacture" refers to the essential melting stage of the batch and, where appropriate, all the subsequent/complementary stages intended to refine/condition the molten glass with a view to its final shaping, in particular in the form of flat glass (glazing), hollow glass (flasks, bottles), glass in the form of mineral wool (in particular rock wool or glass wool) used for its thermal or sound insulation properties, or even possibly glass in the form of so-called textile fibres used in reinforcement.

Various examples of furnace designs are known from the art for melting batch within a furnace vessel so as to obtain a bath of molten materials commonly referred to as a "melt bath" or "glass bath", from which glass can be manufactured.

More particularly, in order to meet the need for production efficiency but also the ecological challenge of reducing carbon dioxide ($CO_2$) emissions, it is known to use an electric glass furnace having a "cold top" design. Using the latter, the batch can be melted by the heat released by the Joule effect produced by electrodes, for example arranged so that they are immersed in the furnace vessel from the top (i.e. top electrodes) and/or from the bottom (i.e. bottom electrodes) and/or from the side (i.e. side electrodes). Furthermore, in such a cold top glass melting electric furnace, the batch is fed from above by appropriate feeding means and forms an upper layer commonly referred to as a "crust" completely covering the melt bath. This crust (which is formed of unmelted materials and particles form the batch) acts as a thermal insulator for the roof of the furnace (still called the "crown"), hence the term "cold top".

To enable a cold top furnace to operate in a stable manner, the rate at which batch is charged per unit area must always be substantially equal to the melting rate (i.e. the rate at which batch is transformed into molten materials under the crust). In fact, when both rates are balanced, the thickness of the crust is kept substantially constant, which then ensures stable melting.

When the crust thickness is not kept constant, two undesirable scenarios may arise. If the crust thickness decreases too much, the crust is no longer able to act as a thermal insulator with respect to the crown, which can not only damage said crown but also contribute to disturbing the general thermal balance within the furnace. In addition, the means used for batch feeding (e.g. boom conveyor, sprinklers) may be damaged or back off from furnace, leading to production interruption and the need to initiate a specific procedure (e.g. "hot top" operations) to avoid equipment damages. Conversely, if the crust thickness increases too much, there is a risk of material overflowing outside the furnace as well as a risk of short-circuiting and damaging electrode holders if they come into contact with molten glass.

The solutions proposed to date for keeping the crust thickness constant are essentially based on manual crust thickness measurements and on adjustments to the electrical power supplied by the furnace electrodes as a function of these measurements (it being understood that a change in the electrical power leads to a change in the temperature of the melt and therefore to a change in the melting rate).

However, this method is problematic insofar as manual measurement operations are cumbersome, time-consuming, potentially unreliable and problematic in terms of safety (due to the exposure to heat and the presence of an electromagnetic field, raw material dust, toxic raw materials, etc. near the furnace). In addition, these manual measurements can only be carried out in certain areas of the furnace surface, so they can only be representative of a partial behaviour of this surface. At least for these reasons, manual measurements are only done at relatively low frequency, typically every hour at best, which has a negative impact on the ability to react quickly to undesirable scenarios such as those mentioned above.

The following documents are known:

- patent application US4149022 discloses a power control system to distribute the electrical energy being supplied to a glass melting furnace of the vertically oriented type wherein raw glass batch is fed at the top level of the melting chamber and molten glass withdrawn at the bottom level of said chamber;

- "Electric Melting of Crystal Glass", Reynolds A., Power Engineering Journal, Institution of Electrical Engineers, Hitchin, GB, vol. 3, no. 5, 1 September 1989, pages 281-288, is an article providing a review of past electric melting technology.

**Summary of the Invention**

The present invention has been made in the light of the above-mentioned problems with the aim of providing a solution for controlling the operation of a cold top glass melting electric furnace in a much more efficient way than the solutions of the art.

To this end, and according to a first aspect, a method according to the invention for controlling a cold top glass melting electric furnace is recited in appended claim 1.

Taking into account the melting kinetics of the batch forming the crust, which is the expression of the physical processes involved in converting the batch solid matter into molten glass, in such a feedback control loop provides highly effective control of the crust thickness. Indeed, by proceeding in this way, the control method takes into account the area that plays the most fundamental role in the furnace's thermal equilibrium, i.e. the area where said physical processes take place.

Moreover, the implementation of a PID-type control of the crust thickness, by means of an appropriate electrical power command, is particularly advantageous, as it enables simple, precise, continuous and therefore particularly efficient control of the operation of the furnace

In particular embodiments, the control method may further include one or more of the following features, taken alone or in any technically feasible combination.

According to particular embodiments, w is between 0.01 and 100, preferably between 0.1 and 10, for example equal to 1.

According to particular embodiments, the method further comprises a set of steps iterated during operation of the furnace and including:

- a determination of at least one temperature map of the crust,
- a detection, in at least one temperature map of the crust, of regions comprising temperatures above a given threshold,
- an update of the target crust thickness based on the result of the detection.

In these particular embodiments, the target crust thickness corresponds to a dynamic setpoint. Performing such a dynamic adjustment of the target crust thickness is particularly advantageous because it allows the behaviour of the feedback control loop, and a fortiori that of the furnace, to be adapted, for example to minimise the appearance of "hot spots" or "volcanos" (i.e. holes within the crust that are formed after full local melting and/or because of instabilities related to the flow of gas resulting from the melting of the glass which may pass through the granular materials forming the batch).

According to particular embodiments, if at least one region comprising temperatures above said threshold is detected, said update comprises a decrease of the target crust thickness.

According to particular embodiments, if no region comprising temperatures above said threshold is detected, said update comprises an increase of the target crust thickness.

According to particular embodiments, the method further comprises a set of steps iterated during operation of the furnace and including:

- a determination of a crust thickness $e_{bf}$, where the crust is considered to be formed by the batch and foam located between the batch and the melt bath,
- a determination of a batch thickness $e_b$,
- a determination of a foam thickness $e_f$ from the following equation:

$$\frac{e_{bf}}{\lambda_{bf}} = \frac{e_b}{\lambda_b} + \frac{e_f}{\lambda_f}$$

where $\lambda_{bf}$, $\lambda_b$ et $\lambda_f$ respectively correspond to estimates of the thermal conductivities of the crust, the batch and the foam,
- a comparison of foam thickness $e_f$ with a given threshold,
- if the foam thickness $e_f$ is above said threshold, a deactivation of the feedback control loop.

The features of these particular embodiments are implemented in addition to the feedback control loop to control the operation of furnace in order to avoid excess foaming.

According to particular embodiments, if the feedback control loop has been deactivated and the foam thickness $e_f$ is below said threshold, the method further comprises a reactivation of the feedback control loop.

According to a second aspect, the invention provides a computer program comprising instructions which, when the program is executed by at least one processor, cause said at least one processor to implement steps of a method according to the invention.

This computer program may use any programming language, and be in the form of source code, object code, or code intermediate between source code and object code, such as in a partially compiled form.

According to a third aspect, the invention provides a computer-readable medium having stored thereon a computer program according to the invention.

The computer-readable medium can be any entity or device capable of storing the computer program. For example, the medium can include storage means such as a ROM, for example a CD ROM or a microelectronic circuit ROM, or magnetic storage means, for example a hard disk.

Alternatively, the computer-readable medium can be an integrated circuit in which the computer program is incorporated, the circuit being adapted to execute the control method or to be used in its execution.

Alternatively, the computer-readable medium can be a transmission medium such as an electrical or optical signal, which can be conveyed via an electrical or optical cable, by radio or by any other suitable means.

According to a fourth aspect, the invention provides a system for controlling a cold top glass melting electric furnace, said system comprising means configured to perform a control method according to the invention.

According to a fifth aspect, the invention provides a glass melting system comprising a cold top glass melting electric furnace and a control system according to the invention.

## Brief Description of the Drawings

Further features and advantages of the present invention will become apparent from the following description of certain embodiments thereof, given by way of illustration only, not limitation, with reference to the accompanying drawings in which:

FIG.1 schematically represents, in its environment, a particular embodiment of a glass melting system according to the invention;

FIG. 2 illustrates an example of the hardware architecture of a data processing device of FIG. 1 ;

FIG. 3 is a functional representation of a feedback control loop executed by the control system of FIG. 1;

FIG. 4 is a flowchart of a particular embodiment of a control method according to the invention, as performed by the control system of FIG. 1 and in which the feedback control loop of FIG. 3 is executed;

FIG. 5 is a graph corresponding to an application example of the feedback control loop;

FIG. 6 is a graph corresponding to another application example of the feedback control loop;

FIG. 7 is a functional representation of the feedback control loop in another particular embodiment of the control method;

FIG. 8 is a flowchart of the control method, in which the feedback control loop of FIG. 7 is performed;

FIG. 9 is a functional representation of the feedback control loop in still another particular embodiment of the control method;

FIG. 10 is a flowchart of the control method, in which the feedback control loop of FIG. 9 is performed;

FIG. 11 schematically represents, in its environment, a particular embodiment of a cold top glass melting electric furnace where there is foam forming a thermal shield at the interface between the melt bath and the batch.

## Detailed Description of Example Embodiments

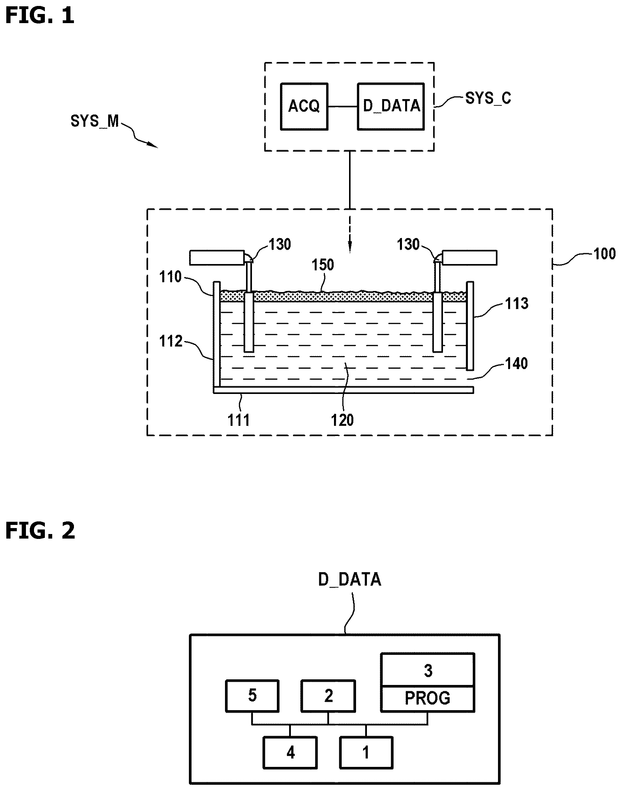

**FIG. 1** schematically represents, in its environment, a particular embodiment of a glass melting system SYS_M according to the invention.

As shown on FIG.1, the system SYS_M comprises a furnace 100 (shown in side view) and a control system SYS_C according to the invention. The "control" function performed by the system SYS_C relates more particularly to the operation of furnace 100.

According to the invention, furnace 100 is a cold top glass melting electric furnace. Thus, and as shown on FIG. 1, furnace 100 comprises a tank 110 typically made of refractory material, for example Alumina Zirconia Silica or Chromium. Said tank 110 comprises a horizontally extending bottom wall 111, as well as vertical side walls 112, 113.

However, nothing precludes considering, according to other examples, a bottom wall inclined with respect to the horizontal, for example in the form of an inclined plane, so as to facilitate conveying molten raw materials toward the bottom of tank 110 at the start of melting.

Furnace 100 is configured to melt raw materials (batch) introduced into tank 110, so as to form a melt bath 120. Melting is carried out by means of electrodes 130 arranged, in this particular embodiment, so as to plunge into the melt bath 120 from above.

The molten material is discharged through a throat 140 located in the lower zone of side wall 113. After the throat 140, the molten glass flows through a forehearth (not shown on FIG. 1) in order to be processed. To this end, furnace 100 is integrated into a glass manufacturing plant comprising, in areas other than that where furnace 100 is located, various devices/systems/components (not shown on FIG. 1) suitable for carrying out refining and/or homogenizing and/or thermal conditioning and/or final glass shaping steps. Such steps are well known to the skilled person, so they are not described further here.

Since the furnace 100 is a cold top furnace, the batch is introduced into the tank 110 from the top by feeding means (the direction of batch feeding is represented by a vertical dotted arrow in FIG. 1) and forms a top layer 150 commonly referred to as a "crust". This crust 150 completely covers the melt bath 120 to create a heat shield with respect to the upper part of furnace 100.

Overall, the configuration of a cold top furnace 100 is well known to the skilled person, and is therefore not described in greater detail here.

For the rest of the description, it is considered in a non-limitative way that the glass to be manufactured from the molten material in furnace 100 is soda-lime silicate comprising or not additional boron in a weight percentage from 2 % to 10 % of $B_2O_3$. However, considering the manufacture of such a glass is only one alternative implementation of the invention.

It should be noted that the batch composition for manufacturing a a particular type of glass is also well known to the skilled person and therefore not described in detail here.

As mentioned above, the operation of furnace 100 is controlled by the control system SYS_C. To this end, and as illustrated on FIG. 1, the system SYS_C comprises acquisition means ACQ as well as a data processing device D_DATA. In particular, the acquisition means ACQ and the data processing device D_DATA are configured to implement a feedback control loop of the crust thickness, through the execution of a control method according to the invention.

The acquisition means ACQ are configured to acquire crust thickness measurements. They may be of any type known to the skilled person.

For example, the acquisition means ACQ may comprise manual measurement means, such as a knotted knife.

According to another example, the acquisition means ACQ may be configured to determine a load loss between the quantity of molten glass evacuated by the throat 140 and the quantity of batch introduced into furnace 100, and deduce therefrom a crust thickness.

According to yet another example, the acquisition means ACQ may be configured to determine a crust thickness in accordance with the method described in the European patent application EP 23169216. As a reminder, this method comprises in particular the following operations:

- a detection, in crust temperature maps respectively acquired at distinct instants thanks to at least one infrared camera integrated into the acquisition means ACQ, of regions comprising temperatures included in an interval of given values of a temperature $T_s$ corresponding to a crust temperature when the furnace 100 is in a stable stationary state,
- a determination, among identical detected regions respectively associated with instants comprised within a given interval, of a temporal variation in temperature,
- a selection of regions for which said temporal temperature variation is less than a given threshold value,
- a determination of a crust thickness value in said selected regions using a heat transfer function defining a relationship between thickness and temperature $T_s$.

In the present embodiment, the data processing device D_DATA is configured to control the acquisition means ACQ, i.e. to pilot their operation by activating and deactivating them by means of appropriate commands.

The data processing device D_DATA is further configured to perform, from crust thickness measurements acquired by the acquisition means ACQ, processing aimed at determining an electrical power control of the furnace 100, by implementing steps of the control method.

**FIG. 2** illustrates an example of the hardware architecture of the data processing device D_DATA of FIG. 1.

The device D_DATA has the hardware architecture of a computer and comprises at least one processor 1, a random access memory 2, a read-only memory 3 and a nonvolatile memory 4. It also comprises communication means 5.

The read-only memory 3 of device D_DATA constitutes a storage medium according to the invention, readable by said at least one processor 1 and on which is stored a computer program PROG according to the invention, comprising instructions for executing steps of the control method. The program PROG defines functional modules of the device D_DATA, which rely on or control the aforementioned hardware elements 1 to 5. These functional modules are described in more detail below with reference to particular embodiments of the control method.

Communication means 5 enable device D_DATA to receive measurements from the acquisition means ACQ, which are also equipped with suitable communication means (not shown in the figures). Communication means 5 also enable device D_DATA to transmit commands to the acquisition means ACQ as well as commands to an actuator (e.g. a current transformer) of furnace 100 able to control the electrical power of electrodes 130 based on such commands. These communication means 5 are based, in a manner known per se, on a communication interface suitable for such data exchanges. Such an interface can be wired or wireless, so that data can be exchanged using any protocol known to the skilled person.

It should be noted that, although said functional modules are described in the present embodiment as being solely integrated in the device D_DATA, nothing precludes the possibility of said functional modules being distributed in a plurality of electronic devices belonging to the system SYS_C.

In addition, although it is considered in the present embodiment that the acquisition means ACQ and the device D_DATA form two distinct entities, a single entity grouping together the hardware and software means of said two entities may also be considered.

It may also be considered that the furnace 100 is equipped with a plurality of electrode groups, each of these groups being associated with a specific zone of the furnace 100. In this case, the SYS_C system may comprise several devices of the type of the device D_DATA, each of these devices being configured to determine an electrical power control of one of the electrode groups through a dedicated current transformer.

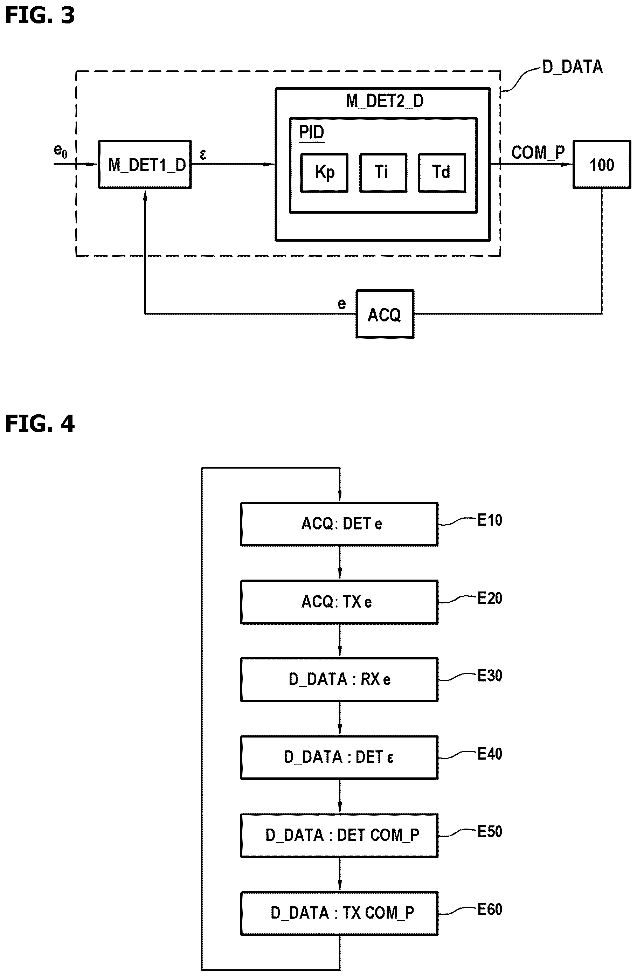

**FIG. 3** is a functional representation of the feedback control loop executed by the control system SYS_C of FIG. 1.

**FIG. 4** is a flowchart of a particular embodiment of the control method according to the invention, as performed by the control system SYS_C of FIG. 1 and in which the feedback control loop of FIG. 3 is executed.

FIGS 3 and 4 are jointly described, with particular reference to a current execution of the feedback control loop, it being understood that this execution is time-iterated so as to ensure continuous control of the operation of the furnace 100.

As shown on FIG. 4, the control method comprises a step E10 of determining a crust thickness measurement e. Said step E10 is implemented by the acquisition means ACQ.

There is no limitation on the conditions for triggering said step E10. For example, device D_DATA may have generated and transmitted an appropriate command to acquisition means ACQ to trigger the acquisition of measurement e. The generation and transmission of such a command may be the subject of specific steps included in the control method.

According to another example, the acquisition means ACQ may spontaneously (i.e. without the need to receive a command) acquire the measurement e, for example at a given acquisition frequency.

The control method also includes a step E20 of transmitting the measurement e to the device D_DATA. This step E20 is implemented by the communication means of the acquisition means ACQ. The measurement e is then received by the device D_DATA during a step E30 implemented by the communication means 5 of said device D_DATA.

The control method then includes a step E40 of determining a deviation $\varepsilon$ between the measurement e and a target crust thickness $e_0$ (i.e. a setpoint). This step E40 is implemented by a first determination module M_DET1_D of the device D_DATA.

This $e_0$ value corresponds, for example, to a crust thickness for a stable stationary operating state of furnace 100, and represents a target crust thickness. Knowledge of this value $e_0$ typically results from the implementation of test campaigns prior to the implementation of the invention and/or from knowledge of the physical laws (thermal, kinetic) involved in the operation of furnace 100 with regard to the batch composition.

Once the deviation $\varepsilon$ has been determined, the control method comprises a step E50 of determining a command COM_P for controlling the electrical power of furnace 100. Said step E50 is implemented by a second determination module M_DET2_D of the device D_DATA.

More particularly, said second determination module M_DET2_D comprises a Proportional-Integral-Derivative type controller, known as a "PID controller". The coefficients of the PID controller are configured to determine the control command COM_P by taking into account the melting kinetics of the batch forming the crust 150.

The implementation of a PID-type control of the thickness of crust 150, by means of an appropriate electrical power command, is particularly advantageous, as it enables precise, continuous and therefore particularly efficient control of the operation of furnace 100.

This efficiency is also increased by taking into account the melting kinetics of the batch forming the crust 150, which is the expression of the physical processes involved in converting the batch solid matter into molten glass. In this way, the control method takes into account the area that plays the most fundamental role in the furnace's thermal equilibrium, i.e. the area where said physical processes take place.

It will now be described in more detail how the coefficients of the PID controller can be determined in the present embodiment.

Batch crust thickness evolution equation is a balance between top batch feeding and melting kinetics below the crust 150. The mass of batch in the crust 150 is given by:

$$\rho S e$$

where $\rho$ is the bulk density of the batch, S is the surface of the crust 150 (which is generally the surface of the furnace 100).

During an infinitesimal span of time dt, the mass of unmolten batch increases with a mass Qdt and decreases with a mass turning into glass kdt, where Q and k are respectively the batch feeding rate in the furnace 100 and the melting rate (i.e. the batch to glass reaction rate, which represents batch melting kinetics). Accordingly, the following equation holds:

$$\rho S \frac{de}{dt} = Q - k$$

In the present embodiment, the melting rate k is assumed to follow an Arrhenius law:

$$k = A \times exp\left(-\frac{E}{RT}\right)$$

where A is the pre-exponential factor, E the batch activation energy (depending on batch composition), T the melt bath temperature in Kelvin (i.e. the glass temperature below the crust 150) and R the universal gas constant.

It is important to note that modelling the batch melting kinetics by an Arrhenius law is only one alternative implementation of the invention. In general, any physical law or approximation of a physical law suitable for modelling batch melting kinetics and known to skilled person can be used.

Let $\Phi$ be the sum of:

- the power needed to melt batch at rate Q and temperature T, and
- the power lost to the furnace environment.

$\Phi$ depends on glass temperature T, batch crust thickness e, batch feeding rate Q, furnace insulation and batch composition. Accordingly, the heat balance of the furnace 100 may be written as follows:

$$m c_p \frac{dT}{dt} = P - \phi$$

where m is the mass of glass in the furnace 100, supposedly at uniform temperature T, $c_p$ is the specific heat capacity of the glass in the furnace 100 and P the total electric power supplied.

The various equations presented above can then be used to apply LQ (Linear Quadratic) control theory, so as to determine, on the one hand, whether furnace 100 is controllable and observable in the sense of Kalman theory, and, on the other hand, the optimal control P(t) that should be applied to rapidly and with a minimal cost converge back towards the target crust thickness $e_0$.

To apply LQ control theory, state evolution equations must be linearized. To do so, slight variations around a stationary stable state of the furnace 100 are considered with crust thickness $e_0$, molten glass temperature $T_0$ and electric power $P_0$. With null time-derivatives, state equations are as follows:

$$Q = A e^{-\frac{E}{RT_0}}$$

$$P_0 = \phi$$

Linearizing the reaction rate leads to:

$$k(T) = Qe^{-\frac{E}{RT_0}\left(\frac{T_0}{T}-1\right)} \approx Q\left(1 + \frac{E}{RT_0^2}(T - T_0)\right)$$

Because $\phi$ may be considered as locally constant for small variations of crust thickness e and molten glass temperature T, the linearized set of equations is hence:

$$\begin{cases} \dfrac{de}{dt} = \dfrac{QE}{\rho SRT_0^2}(T_0 - T) \\ \dfrac{dT}{dt} = \dfrac{1}{mc_p}(P - P_0) \end{cases}$$

From this linearized set of equations, two timescales appear. A first timescale $\tau_c$ is a crust characteristic evolution time (i.e. characteristic melting time of the batch):

$$\tau_c = \frac{\rho SRT_0 e_0}{QE}$$

A second timescale $\tau_g$ is a characteristic glass heat exchange time:

$$\tau_g = \frac{mc_p T_0}{P_0}$$

In practice, in the context of industrial furnaces, it may be observed that timescale $\tau_c$ is generally of the order of several minutes, whereas timescale $\tau_g$ is of the order of several hours.

For the rest of the description, the ratio between $\tau_g$ and $\tau_c$ is denoted $\xi$, and is a positive dimensionless parameter.

In a conventional way, the study of the controllability and observability of a system is carried out using dimensionless parameters. For this purpose, the following additional notations are introduced:

$$\tilde{e} = \frac{e_0 - e}{e_0}, \; \tilde{T} = \frac{T_0 - T}{T_0}, \; \tilde{u} = \frac{P - P_0}{P_0}, \; \tilde{t} = \frac{t}{\tau_g}$$

$$\tilde{X} = \begin{pmatrix} \tilde{e} \\ \tilde{T} \end{pmatrix}, \tilde{A} = \begin{pmatrix} 0 & -\xi \\ 0 & 0 \end{pmatrix}, \tilde{B} = \begin{pmatrix} 0 \\ -1 \end{pmatrix}, \tilde{C} = \begin{pmatrix} 1 & 0 \end{pmatrix}$$

Accordingly, the linearized set of equations already mentioned above can be reformulated using the following matrix notation:

$$\frac{d}{d\tilde{t}}\begin{pmatrix} \tilde{e} \\ \tilde{T} \end{pmatrix} = \begin{pmatrix} 0 & -\xi \\ 0 & 0 \end{pmatrix}\begin{pmatrix} \tilde{e} \\ \tilde{T} \end{pmatrix} + \begin{pmatrix} 0 \\ -1 \end{pmatrix}\tilde{u}$$

or, in equivalent terms:

$$\frac{d\tilde{X}}{d\tilde{t}} = \tilde{A}\tilde{X} + \tilde{B}\tilde{u}$$

It follows from that, as well as from the fact that the observable is given by the following equation:

$$\tilde{C}\tilde{X} = \tilde{e}$$

that the system formed by the furnace 100 is effectively observable and controllable.

Indeed, the observability matrix $M_1$ is given by:

$$M_1 = \begin{pmatrix} \tilde{C} \\ \tilde{C}\tilde{A} \end{pmatrix} = \begin{pmatrix} 1 & 0 \\ 0 & -\xi \end{pmatrix}$$

and the kernel of the matrix $M_1$ is zero, which ensures observability of the system formed by the furnace 100.

The controllability matrix $M_2$, for its part, is given by:

$$M_2 = \begin{pmatrix} \tilde{B} & \tilde{A}\tilde{B} \end{pmatrix} = \begin{pmatrix} 0 & \xi \\ -1 & 0 \end{pmatrix}$$

and the rank of the matrix $M_2$ is equal to 2, which ensures controllability of the system formed by the furnace 100.

Since the system formed by the furnace 100 is controllable and observable, it becomes possible to determine optimal coefficients of the PID controller from which the control command COM_P can be derived. In a conventional way, optimality is understood in the sense of a given cost function. For this purpose, and in a non-limitative way, it is considered in the present embodiment a cost function $C_w$ capable of ensuring minimal deviation to equilibrium state but with an actuator reasonably close to equilibrium power $P_0$. Accordingly, the cost function $C_w$ is computed as follows:

$$C_w(\tilde{u}) = \int_0^{+\infty} \left( \left\| \tilde{X}(t) \right\|^2 + \left( w\tilde{u}(t) \right)^2 \right) dt$$

where w is a real positive number which acts as a weighing parameter to be tuned regarding power overshoot management.

There is no limitation on the value that w can assume. By way of example, w can be between 0.01 and 100, preferably between 0.01 and 10, for example equal to 1. In particular, the value of w can be chosen taking into account that the higher w, the more the power will be maintained close to $P_0$ (preventing overshoot), but the longer the stabilization of the system formed by the furnace 100 will be.

Following the principles of LQ theory, the control function that minimizes cost function $C_w$ is:

$$\tilde{u} = \frac{1}{w^2} \tilde{B}^T Y \tilde{X}$$

where the subscript "T" denotes the transposed operator, and Y is the unique real negative-definite matrix solution of the following algebraic Riccati equation:

$$\tilde{A}^T Y + Y\tilde{A} + \frac{1}{w^2} Y\tilde{B}\tilde{B}^T Y = I$$

where I is the identity matrix.

In the end, the control function is calculated according to the following formula:

$$\tilde{u} = -\frac{1}{w} \left( \tilde{e} + \frac{\sqrt{1 + 2\xi w}}{\xi} \frac{d\tilde{e}}{d\tilde{t}} \right)$$

Now, the standard form of a PID control function is given by the following formula:

$$\tilde{u} = -\tilde{K}_p \left( \tilde{e} + \frac{1}{\tilde{T}_i} \int \tilde{e} d\tilde{t} + \tilde{T}_d \frac{d\tilde{e}}{d\tilde{t}} \right)$$

where $\tilde{K}_p$, $\tilde{T}_i$ and $\tilde{T}_d$ are the dimensionless coefficients of the PID controller and correspond respectively to proportional gain, integration time and derivative time.

By way of identification, it follows from the above that the integral component of the PID controller is zero and the other dimensionless coefficients of the PID controller are:

$$\widetilde{K}_p = \frac{1}{w}, \widetilde{T}_d = \frac{\sqrt{1 + 2\xi w}}{\xi}$$

From this, and under dimensional form, it follows that, defining the error $\varepsilon = e_0 - e$:

$$P - P_0 = -\frac{P_0}{we_0}\left(\varepsilon + \tau_g \frac{\sqrt{1 + 2\xi w}}{\xi} \frac{d\varepsilon}{dt}\right)$$

which leads to the following formulae for dimensional optimal PID coefficients:

$$K_p = \frac{P_0}{we_0},$$

$$T_d = \tau_g \frac{\sqrt{1 + 2\xi w}}{\xi} = \tau_c \sqrt{1 + 2\xi w}$$

As indicated above, the command COM_P for controlling the electrical power of the furnace 100 is determined by the PID controller of the second determination module M_DET2_D when step E50 is carried out.

Subsequently, returning to the loop of FIG.3 and the control method of FIG. 4, said method comprises a step E60 of transmitting the command COM_P to the furnace 100, more particularly to an actuator (e.g. a current transformer) capable of controlling the electric power of the electrodes 130 based on said command COM_P. Said step E60 is implemented by the communication means 5 of the device D_DATA.

Steps E10 to E60 are then repeated, for example at a given frequency, in subsequent iterations of the feedback control loop.

An application example of the feedback control loop is now provided. For illustrative purposes, a furnace 100 associated with the parameters given in the table TABLE_EX below is considered (the unit "t/d/m2" stands for "ton per day per square meter", where "ton" refers to metric ton).

TABLE EX

| Q/S | m | $C_p$ | E/R | $P_0$ | $e_0$ | $\rho$ | $T_0$ |
|---|---|---|---|---|---|---|---|
| 2.6 t/d/m$^2$ | 115 t | 1.5 kJ/K/kg | 1.8 x 10$^4$ K | 3.6 MW | 10 cm | 1.5 t/m$^3$ | 1600 K |

From the values contained in this table, and considering a weight w equal to 1, it follows that:

$$\tau_g = 21\,h,$$

$$\tau_c = 7\,min,$$

$$\xi = 1.7 \times 10^2,$$

$$K_p = 3.6 \times 10^2\,kW/cm,$$

$$T_d = 2.3\,h$$

In this application example, an initial non-dimensional disturbance is also considered:

$$\tilde{X}(t=0) = \begin{pmatrix} -1\ \% \\ 0.3\ \% \end{pmatrix}$$

which corresponds to an initial slight over-thickness of 1 % and under-temperature of -0.3 %.

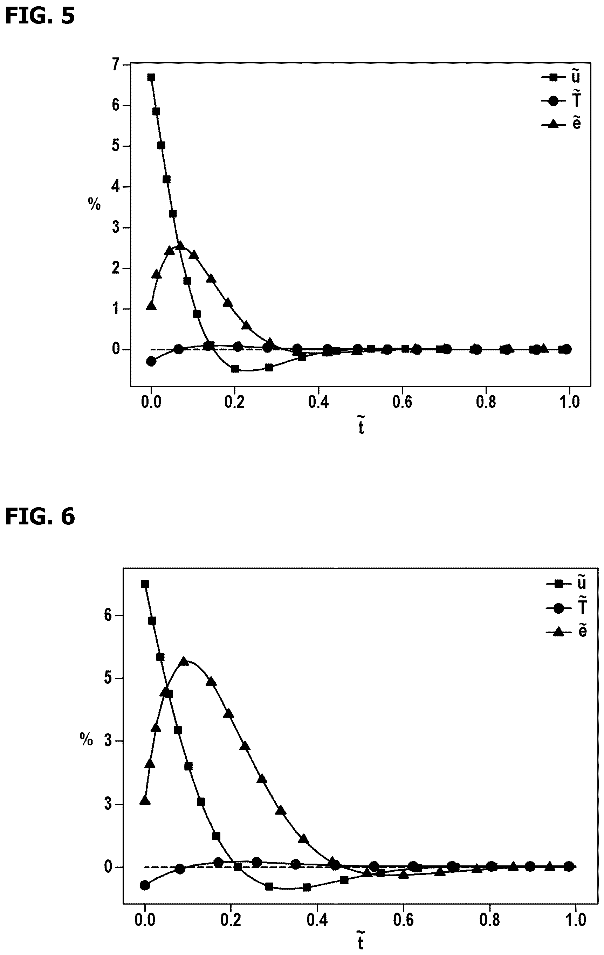

The response of the PID-regulated furnace 100 is numerically solved with a first order explicit Euler scheme and is illustrated in the graph of **FIG. 5.** In this graph, the abscissa represents non-dimensional time $\tilde{t}$. Three curves are shown:

- a continuous curve with square symbols representing the evolution of $\tilde{u}$;
- a continuous curve with circular symbols representing the evolution of $\tilde{T}$;
- a continuous curve with triangular symbols representing the evolution of $\tilde{e}$.

As shown in the graph of FIG. 5, the PID controller parameterized by the coefficients determined by the device D_DATA provides effective control of the operation of the furnace 100, i.e. fast damping of the system deviations, with no oscillation and controlled power overshoot.

**FIG. 6** is a graph corresponding to another application example of the feedback control loop in which the values provided in the TABLE_EX table are again taken into account. However, unlike the application example in FIG. 5, a weight w equal to 2 is considered here.

As shown in the graph of FIG. 6, in comparison with the graph of FIG. 5, the power overshoot is decreased but stabilization takes longer.

The determination of the optimized PID coefficients has been described so far with the assumption that the power $\phi$ is a given value free of noise, which leads to the result that the PID controller has no integral component. In practice, the power $P_0$ corresponding to target thickness $e_0$ may be also imprecisely known. Noise and uncertainty are for example due to variability in certain operating parameters of the furnace 100 (e.g. variability in raw material composition). Therefore, according to examples not covered by the invention, this noise/uncertainty may be taken into account and controlled by adding a non-zero integral component to the PID controller so as to stabilize the system at the correct target value $e_0$.

Moreover, certain measurements also suffer from noise, uncertainty or even bias. So, in general, any method known to skilled person may be considered to take account of this noise and thus dampen fluctuations inherent in the manufacturing method and the measurement, such as, for example, by adding a suitable integral component to the PID controller and/or by adjusting the optimum values of the PID controller coefficients $K_p$ and $T_d$ and/or by using time smoothing (averaging over a sliding window) of the measured crust thickness signal and/or by using a dead band (values of the target-setpoint deviation between two values framing 0, for which no control adjustment is made).

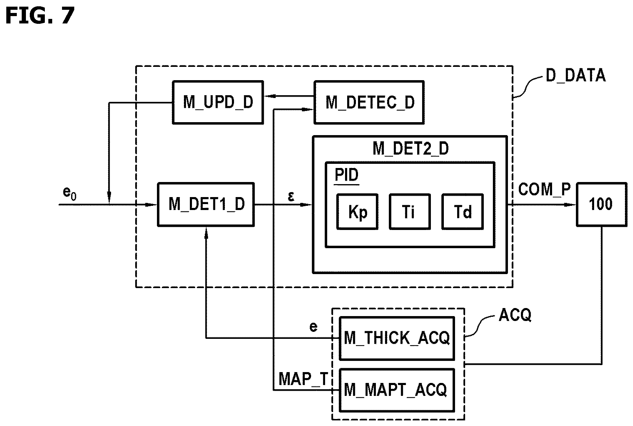

**FIG. 7** is a functional representation of the feedback control loop in another particular embodiment.

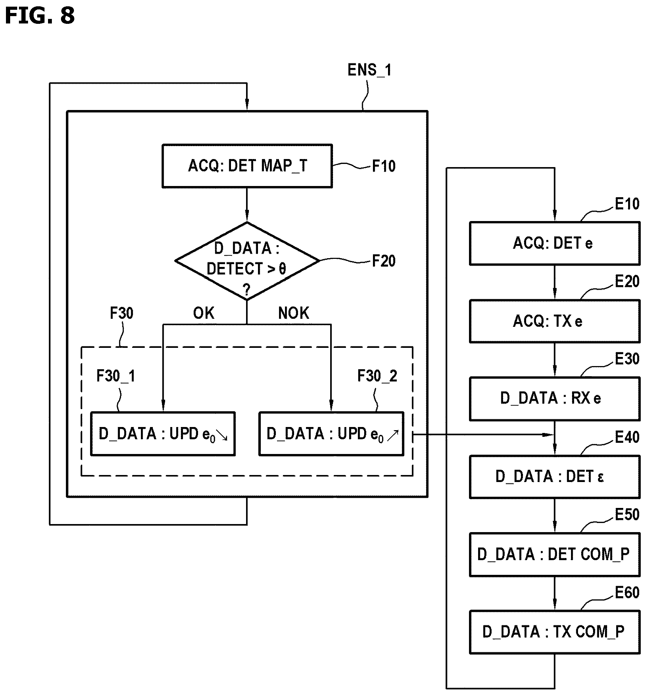

**FIG. 8** is a flowchart of the control method, in which the feedback control loop of FIG. 7 is performed.

In this other particular embodiment of FIGS. 7 and 8, the control method comprises, in addition to steps E10 to E60, a set ENS_1 of steps iterated during operation of the furnace 100. More particularly, in this other particular embodiment, the iterative execution of the steps of set ENS_1 is performed in parallel with the execution of the feedback control loop. For example, the iteration process may be performed at a given frequency.

In this other particular embodiment, it is considered that step E10 of determining a crust thickness measurement e is implemented by a first thickness acquisition module M_THICK_ACQ of the acquisition means ACQ.

Said set ENS_1 comprises a step F10 of determining at least one temperature map MAP_T of the crust 150. Said step F10 is implemented by a temperature map acquisition module M_MAPT_ACQ of the acquisition means ACQ.

Said at least one temperature map MAP_T is determined by the acquisition means ACQ using any method known to the skilled person. For example, one or more infrared cameras may be used, as described for example in the aforementioned European application EP 23169216.

Once said at least one temperature map MAP_T has been transmitted to the device D_DATA (these steps are not shown on FIG. 8 for the sake of simplicity), said set ENS_1 further comprises a step F20 of detecting, in said at least one temperature map MAP_T of the crust 150, regions comprising temperatures above a given threshold $\theta$. Said step F20 is implemented by a detection module M_DETEC_D of the device D_DATA.

By setting the threshold $\theta$ appropriately, one can detect local heterogeneities within the crust 150, in particular what are called "hot spots" or "volcanos". These latter correspond to holes within the crust 150 that are formed after full local melting and/or because of instabilities related to the flow of gas resulting from the melting of the glass which may pass through the granular materials forming the batch.

More specifically, to detect "hot spots" or "volcanos", the threshold $\theta$ may be fixed to the temperature at which said "hot spots" or "volcanos" are expected or observed to occur within the crust 150. This temperature usually varies depending on several parameters such as the melting temperature of the batch, the temperature gradients, the movements of convection within the melt bath, the power provided to the furnace 100, the temperature within the inner area of the furnace 100 above the crust 150, the thickness of the crust 150, etc.

For example, the threshold value $\theta$ may be determined experimentally through an inner inspection of the furnace 100 by means of temperature sensors, e.g., thermocouples, infrared sensors.

It may also be determined automatically by computing a statistical distribution within the temperature maps and determining, from this distribution, the cut-off temperature above which the temperature correspond to the "hot spots" or "volcanos".

The set ENS_1 also includes a step F30 of updating the target crust thickness $e_0$ based on the result of the detection. Said step F30 is implemented by an updating module M_UPD_D of the device D_DATA.

In other words, in this other particular embodiment, the target crust thickness $e_0$ corresponds to a dynamic setpoint. Performing such a dynamic adjustment of the target crust thickness $e_0$ is particularly advantageous because it allows the behaviour of the feedback control loop, and a fortiori that of the furnace 100, to be adapted, for example to minimise the appearance of "hot spots" or "volcanos".

It may be observed that if $e_0$ is modified, then the power $P_0$ is theoretically different from that used in the previous iteration, and a fortiori so are the optimized PID coefficients. Nothing prevents the power $P_0$ and the PID coefficients from being updated accordingly. In practice, however, the variation in optimized PID coefficients is relatively small, and it is therefore possible to keep them constant over the course of the various iterations.

By way of a non-limiting example, and as shown on FIG. 8, if at least one region comprising temperatures above said threshold $\theta$ is detected, said update comprises a substep F30_1 of decreasing the target crust thickness $e_0$. Reducing the target crust thickness $e_0$ in this way allows the furnace 100 to return to a stable operating state.

Additionally, in this example, if no region comprising temperatures above said threshold $\theta$ is detected, said update comprises a substep F30_2 of increasing the target crust thickness $e_0$. Increasing the target crust thickness $e_0$ in this way allows heat loss through the crust 150 to be reduced.

It may be noted that the invention is not limited by the execution of step F30_2 in the event that no region comprising temperatures above said threshold $\theta$ is detected. Indeed, in such a situation, it may also be possible, for example, to maintain the target crust thickness $e_0$ unchanged.

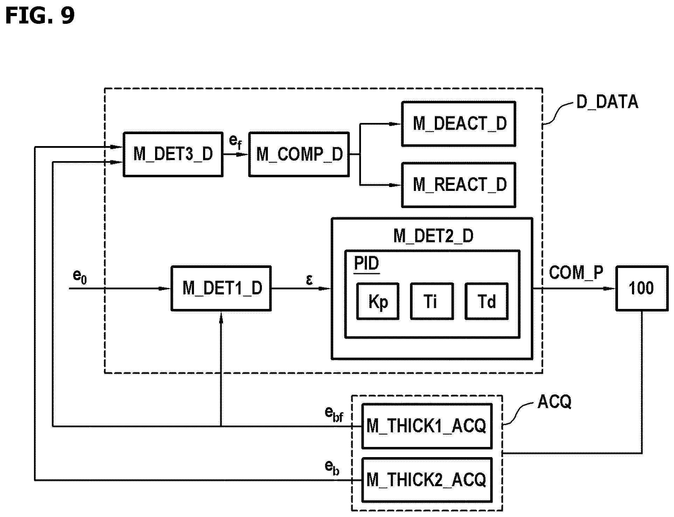

FIG. 9 is a functional representation of the feedback control loop in still another particular embodiment.

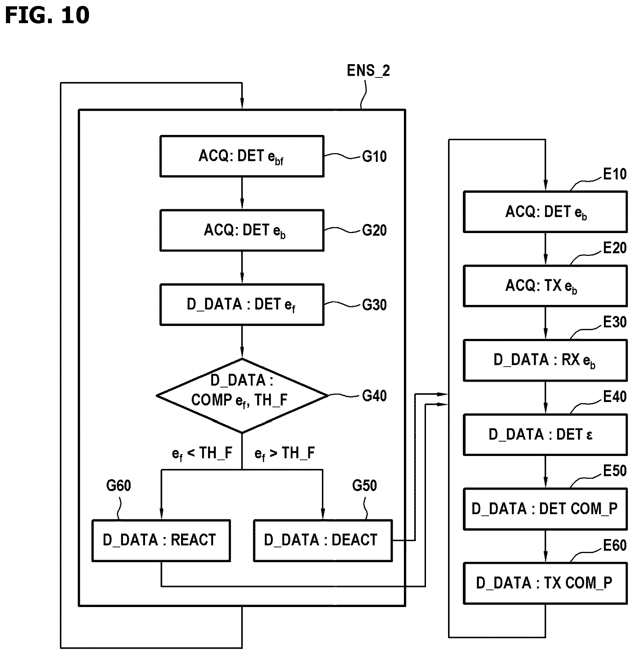

FIG. 10 is a flowchart of the control method, in which the feedback control loop of FIG. 9 is performed.

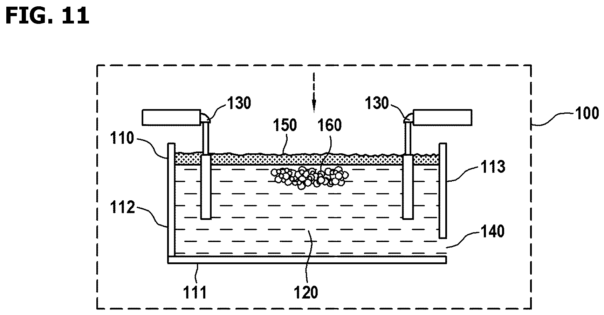

As is well known, a so-called "foaming" phenomenon can occur on the surface of the melt bath 120 during operation of furnace 100, as illustrated on FIG. 11 (only furnace 100 is shown in FIG. 11 for simplification purposes).

The presence of this foam 160 results in particular from the contents of the batch. For recycling purposes, the batch typically contains used materials such as household or flat cullet and/or glass wool (e.g. glass wool waste from a production line or end-of-life products). However, these used materials contribute to increasing the proportion of carbonaceous chains (e.g. organic pollution on bottle cullet, or binder in mineral wool) as well as sulfate in the melt bath 120. As the foaming phenomenon is thermo-activated, the sulfate is desolubilized by reacting with the added carbon, thus generating foam 160.

This foam 160 forms a thermal shield at the interface between the melt bath 120 and the batch that has not yet melted, which is detrimental to the heat transfer required to melt the batch. In particular, this limits the ability to use recycled products, as well as causing tonnage management problems, increasing the risk of the bath overflowing out of the tank, significant overconsumption of energy, and a rise in temperature contributing to premature wear of the refractory materials of furnace 100.

Accordingly, the other particular embodiment of FIGS 9 and 10 is implemented in addition to the feedback control loop to control the operation of furnace 100 in order to avoid excess foaming.

To this end, the control method comprises, in addition to steps E10 to E60, a set ENS_2 of steps iterated during operation of the furnace 100. For example, the iteration process may be performed at a given frequency.

Said set ENS_2 comprises a step G10 of determining a crust thickness $e_{bf}$. Said step G10 is implemented by a first thickness acquisition module M_THICK1_ACQ of the acquisition means ACQ.

It should be noted that, in this other particular embodiment, the crust thickness $e_{bf}$ is determined by considering that the crust 150 is formed from the batch as well as from foam 160 located between the batch and the melt bath 120.

Any method known to the skilled person may be used to carry out such a crust thickness measurement $e_{bf}$ in which the foam thickness is accounted for. In particular, the method described in the aforementioned European application EP 23169216 is particularly adapted.

Said ENS_2 assembly further comprises a step G20 of determining a batch thickness $e_b$. Said step G20 is implemented by a second thickness acquisition module M_THICK2_ACQ of the acquisition means ACQ.

Performing, on the one hand, a crust thickness measurement $e_{bf}$ in which the foam thickness is taken into account, and, on the other hand, a measurement of the thickness $e_b$ of the batch alone is advantageous as it enables the thickness of the foam 160 alone to be estimated as described hereafter.

In any case, it should be noted that measurements $e_{bf}$ and $e_b$ are carried out independently of each other. In particular, if measurement $e_{bf}$ is carried out in accordance with the method described in the aforementioned European application EP 23169216, this implies that measurement $e_b$ is carried out using another method, such as one of those already mentioned (manual method or method for determining a load loss between the quantity of molten glass discharged by throat 140 and the quantity of batch introduced into furnace 100).

It also follows from the independence of these two measurements that if one of them is carried out during execution of the feedback control loop (e.g. according to step E10), then the other is carried out outside (i.e. in parallel) said feedback control loop. In the present case, it is assumed, without limitation, that measurement $e_{bf}$ is obtained during execution of the feedback control loop.

Once the measurements $e_{bf}$ and $e_b$ have been made, they are transmitted by the acquisition means ACQ to the device D_DATA (these steps are not shown on FIG. 10 for the sake of simplicity).

Said set ENS_2 further comprises a step G30 of determining of a foam thickness $e_f$. Said step G30 is implemented by a third determination module M_DET3_D of the device D_DATA.

In particular, the foam thickness $e_f$ is determined from the following equation:

$$\frac{e_{bf}}{\lambda_{bf}} = \frac{e_b}{\lambda_b} + \frac{e_f}{\lambda_f}$$

where $\lambda_{bf}$, $\lambda_b$ and $\lambda_f$ respectively correspond to estimates of the thermal conductivities of the crust 150 (i.e. batch + foam 160), the batch and the foam 160.

Any method known to the skilled person for estimating these thermal conductivities $\lambda_{bf}$, $\lambda_b$ and $\lambda_f$ may be used, the choice of a particular method constituting only an alternative implementation of the invention. For example, these estimates can be derived from numerical simulations, or from previous test campaigns.

When the thickness $e_f$ of foam 160 has been determined, said set of steps ENS_2 comprises a step G40 of comparing the foam thickness $e_f$ with a given threshold TH_F. Said step G40 is implemented by a comparison module M_COMP_D of the device D_DATA.

Therefore, if the foam thickness $e_f$ is above said threshold TH_F, said set of steps ENS_2 comprises a step G50 of deactivating the feedback control loop execution. Said step G50 is implemented by a deactivation module M_DEACT_D of the device D_DATA.

When the feedback control loop is deactivated, the electrical power used to operate the furnace 100 is that determined during the last iteration of the loop. At this point, batch feeding, which may itself be regulated based on the glass level in the forehearth, for example by means of another PID controller, is still in operation. Various options may therefore be considered. For example, it may be decided to implement (manually by an operator) a procedure for reducing the quantity of glass produced by reducing the rate of batch feeding. Eventually, it may be decided to stop batch feeding entirely, but this is an extreme procedure as it puts the crown in "hot top" configuration, requiring additional operations to prevent damage to the equipment.

Assume now that the execution of the feedback control loop has been deactivated, and that steps G10 to G40 continue to be performed. If it is determined that the foam thickness $e_f$ is still above said threshold TH_F, deactivation is maintained. In contrast, in the present embodiment, if it is determined during this iteration of steps G10 to G40 that the foam thickness $e_f$ is below said threshold TH_F, said set of steps ENS_2 further comprises a step G60 of reactivating the execution of the feedback control loop. Said step G60 is implemented by a reactivation module M_REACT_D of the device D_DATA.

It is also understood that if the foam thickness $e_f$ is below said threshold TH_F while the execution of the feedback control loop and/or feeding has not been previously deactivated, the operation of furnace 100, with regard to the problem of the possible presence of foam 160, is not modified.

It is important to note that the particular embodiments of FIGS 7 and 8 on the one hand and FIGS 9 and 10 on the other have been described separately. However, this is not a limitation of the invention, which covers still further embodiments in which these particular embodiments are combined with each other (i.e., both sets of steps ENS_1 and ENS_2 are performed in parallel).

Furthermore, it has been considered so far that steps G10 to G30 for determining foam thickness $e_f$ are combined with steps G60 to G80 for controlling operation of furnace 100. However, according to examples not covered by the invention, the sole determination of foam thickness $e_f$ (i.e. only steps G10 to G30) may be performed, irrespective of any control of a furnace. This can advantageously be done for the purpose of recording the operating parameters of furnace, for example, to subsequently feed numerical simulations.

According to an example not covered by the invention, the feedback control loop may include a machine learning model that has been trained on training samples comprising crust thickness measurements as inputs and furnace electrical power control commands as outputs. In this way, at each iteration of the feedback control loop, the trained machine learning model is used to infer a new command based on the current crust thickness measurement. According to yet another example not covered by the invention, it is also possible to consider a feedback control loop implemented according to model predictive control where the model(s) used are based on equations such as those described above (i.e.

the melting kinetics of the batch forming the crust) to evaluate the furnace dynamics over a given time horizon.

## Claims

1. A method for controlling a cold top glass melting electric furnace, said method comprising the execution of a feedback control loop of the thickness of a crust located on the surface of the melt bath, said feedback control loop comprising a Proportional-Integral-Derivative type controller, called "PID controller", whose coefficients are configured to determine said command for controlling the electric power of the furnace by taking into account the melting kinetics of the batch forming the crust,

   **characterized in that** the integral component of the PID controller is zero, and:

   - the proportional gain coefficient $K_p$ of the PID controller is:

   $$K_p = \frac{P_0}{we_0}$$

   where w is a positive real number, $P_0$ is the operating electrical power of the furnace in a stationary stable state corresponding to a target state, and $e_0$ is the crust thickness in said target state,
   - the derivative time coefficient $T_d$ of the PID controller is:

   $$T_d = \tau_g \frac{\sqrt{1 + 2\xi w}}{\xi}$$

   where $\tau_g$ is a characteristic glass heat exchange time expressed as:

   $$\tau_g = \frac{mc_p T_0}{P_0}$$

   where m is the mass of glass in the furnace, $c_p$ is the specific heat capacity of the glass in the furnace and $T_0$ is a melt bath temperature in said target state, and $\xi$ is the ratio between $\tau_g$ and $\tau_c$, $\tau_c$ being a crust characteristic evolution time expressed as:

   $$\tau_c = \frac{\rho S R T_0 e_0}{QE}$$

   where $\rho$ is the bulk density of the batch, S is the surface of the crust, Q is a batch feeding rate in the furnace, R is the universal gas constant and E is the batch activation energy.

2. The method according to claim 1, wherein w is between 0.01 and 100, preferably between 0.1 and 10, for example equal to 1.

3. The method according to any one of claims 1 to 2, said method further comprising a set of steps iterated during operation of the furnace and including:

   - a determination of at least one temperature map of the crust,
   - a detection, in said at least one temperature map of the crust, of regions comprising temperatures above a given threshold,
   - an update of the target crust thickness based on the result of the detection.

4. The method according to claim 3, wherein, if at least one region comprising temperatures above said threshold is detected, said update comprises a decrease of the target crust thickness.

5. The method according to any one of claims 3 to 4, wherein, if no region comprising temperatures above said threshold is detected, said update comprises an increase of the target crust thickness.

6. The method according to any one of claims 1 to 5, said method further comprising a set of steps iterated during operation of the furnace and including:

- a determination of a crust thickness $e_{bf}$, where the crust is considered to be formed by the batch and foam located between the batch and the melt bath,
- a determination of a batch thickness $e_b$,
- a determination of a foam thickness $e_f$ from the following equation:

$$\frac{e_{bf}}{\lambda_{bf}} = \frac{e_b}{\lambda_b} + \frac{e_f}{\lambda_f}$$

where $\lambda_{bf}$, $\lambda_b$ et $\lambda_f$ respectively correspond to estimates of the thermal conductivities of the crust, the batch and the foam,
- a comparison of foam thickness $e_f$ with a given threshold,
- if the foam thickness $e_f$ is above said threshold, a deactivation of the feedback control loop.

7. The method according to claim 6, wherein if the feedback control loop has been deactivated and the foam thickness $e_f$ is below said threshold, a reactivation of the feedback control loop.

8. A computer program comprising instructions which, when the program is executed by at least one processor, cause said at least one processor to implement the steps of a method according to any one of claims 1 to 7.

9. A computer-readable medium having stored thereon a computer program according to claim 8.

10. A system for controlling a cold top glass melting electric furnace, said system comprising means configured to perform a control method according to any one of claims 1 to 7.

11. A glass melting system comprising a cold top glass melting electric furnace and a control system according to claim 10.


**Patentansprüche**

1. Verfahren zur Regelung eines elektrischen Cold-Top-Galsschmelzofens, wobei das Verfahren die Ausführung eines geschlossenen Regelkreises bezüglich der Dicke einer sich auf der Oberfläche des Schmelzbades befindlichen Kruste umfasst, wobei der geschlossene Regelkreis einen Regler vom Typ Proportional-Integral-Derivativ umfasst, der als "PID-Regler" bezeichnet wird, dessen Koeffizienten konfiguriert sind, um den Befehl zur Regelung der elektrischen Leistung des Ofens zu bestimmen, indem die Schmelzkinetik der die Kruste bildenden Charge berücksichtigt wird, **dadurch gekennzeichnet, dass** die Integralkomponente des PID-Reglers null ist, und:

- der Proportionalverstärkungskoeffizient $K_p$ des PID-Reglers ist:

$$K_p = \frac{P_0}{we_0}$$

wobei w eine positive reelle Zahl ist, $P_0$ die elektrische Betriebsleistung des Ofens in einem stationären stabilen Zustand entsprechend einem Sollzustand ist und $e_0$ die Krustendicke in dem Sollzustand ist,
- der Derivat-Zeitkoeffizient $T_d$ des PID-Reglers ist:

$$T_d = \tau_g \frac{\sqrt{1 + 2\xi w}}{\xi}$$

wobei $\tau_g$ eine charakteristische Wärmeaustauschzeit für Glas ist, die ausgedrückt wird als:

$$\tau_g = \frac{mc_p T_0}{P_0}$$

wobei m die Masse des Glases im Ofen ist, $c_p$ die spezifische Wärmekapazität des Glases im Ofen ist und $T_0$ eine Schmelzbadtemperatur in dem Sollzustand ist, und $\zeta$ das Verhältnis zwischen $T_g$ und $T_c$ ist, wobei $T_c$ eine charakteristische Entwicklungszeit der Kruste ist, ausgedrückt als:

$$\tau_c = \frac{\rho S R T_0 e_0}{Q E}$$

wobei $\rho$ die Schüttdichte der Charge ist, S die Oberfläche der Kruste ist, Q die Chargenbeschickungsrate im Ofen ist, R die universelle Gaskonstante ist und E die Chargenaktivierungsenergie ist.

2. Verfahren nach Anspruch 1, wobei w zwischen 0,01 und 100 liegt, vorzugsweise zwischen 0,1 und 10, zum Beispiel gleich 1.

3. Verfahren nach einem der Ansprüche 1 bis 2, wobei das Verfahren ferner eine Reihe von Schritten umfasst, die während des Betriebs des Ofens iteriert werden, einschließlich:

   - eine Bestimmung mindestens einer Temperaturkarte der Kruste,
   - eine Erfassung, in der mindestens einen Temperaturkarte der Kruste, von Bereichen umfassend Temperaturen oberhalb eines vorgegebenen Schwellenwerts,
   - eine Aktualisierung der Sollkrustendicke basierend auf dem Ergebnis der Detektion.

4. Verfahren nach Anspruch 3, wobei, falls mindestens eine Region umfassend Temperaturen oberhalb der Schwelle detektiert wird, die Aktualisierung eine Verringerung der Sollkrustendicke umfasst.

5. Verfahren nach einem der Ansprüche 3 bis 4, wobei, falls keine Region umfassend Temperaturen oberhalb des Schwellenwerts detektiert wird, die Aktualisierung eine Erhöhung der Sollkrustendicke umfasst.

6. Verfahren nach einem der Ansprüche 1 bis 5, wobei das Verfahren ferner eine Reihe von Schritten umfasst, die während des Betriebs des Ofens iteriert werden, einschließlich:

   - eine Bestimmung einer Krustendicke $e_{bf}$, wobei die Kruste als durch die Charge und den Schaum gebildet betrachtet wird, der sich zwischen der Charge und dem Schmelzbad befindet,
   - eine Bestimmung einer Chargendicke $e_b$,
   - eine Bestimmung einer Schaumdicke $e_f$ aus der folgenden Gleichung:

$$\frac{e_{bf}}{\lambda_{bf}} = \frac{e_b}{\lambda_b} + \frac{e_f}{\lambda_f}$$

   wobei $\lambda_{bf}$, $\lambda_b$ und $\lambda_f$ jeweils Schätzungen der Wärmeleitfähigkeiten der Kruste, der Charge und des Schaums entsprechen,
   - ein Vergleich der Schaumdicke $e_f$ mit einem gegebenen Schwellenwert,
   - wenn die Schaumdicke $e_f$ über dem Schwellenwert liegt, eine Deaktivierung des geschlossenen Regelkreises.

7. Verfahren nach Anspruch 6, wobei, wenn der geschlossene Regelkreis deaktiviert wurde und die Schaumdicke $e_f$ unter dem Schwellenwert liegt, eine Reaktivierung des geschlossenen Regelkreises erfolgt.

8. Computerprogramm, das Anweisungen umfasst, die, wenn das Programm von mindestens einem Prozessor ausgeführt wird, den mindestens einen Prozessor veranlassen, die Schritte eines Verfahrens nach einem der Ansprüche 1 bis 7 zu implementieren.

9. Computerlesbares Medium mit einem darauf gespeicherten Computerprogramm nach Anspruch 8.

**10.** System zur Regelung eines elektrischen Cold-Top-Galsschmelzofens, wobei das System Mittel umfasst, die konfiguriert sind, um ein Regelverfahren nach einem der Ansprüche 1 bis 7 durchzuführen.

**11.** Glasschmelzsystem, umfassend einen elektrischen Cold-Top-Galsschmelzofen und ein Regelsystem nach Anspruch 10.

**Revendications**

**1.** Procédé de contrôle d'un four verrier électrique à voûte froide, ledit procédé comportant l'exécution d'une boucle de contrôle de l'épaisseur de croute localisée en surface du bain de verre en fusion, ladite boucle de contrôle comportant un contrôleur de type Proportionnel-Intégral-Dérivé, dit "contrôleur PID", dont les coefficients sont configurés pour déterminer une commande de contrôle de puissance électrique du four en prenant en compte la cinétique de fusion du mélange de matières formant la croute,

**caractérisé en ce que** la composante intégrale du contrôleur PID est nulle, et:

- le coefficient de gain proportionnel $K_p$ du contrôleur PID est :

$$K_p = \frac{P_0}{we_0}$$

où w est un nombre réel positif, $P_0$ est la puissance électrique de fonctionnement du four dans un état stable stationnaire correspondant à un état cible, et $e_0$ est l'épaisseur de la croûte dans ledit état cible,
- le coefficient de dérivation temporelle $T_d$ du contrôleur PID est:

$$T_d = \tau_g \frac{\sqrt{1 + 2\xi w}}{\xi}$$

où $\tau_g$ est un temps d'échange thermique caractéristique du verre exprimé comme suit :

$$\tau_g = \frac{m c_p T_0}{P_0}$$

où m est la masse de verre dans le four, $c_p$ est la capacité thermique spécifique du verre dans le four et $T_0$ est la température du bain de fusion dans ledit état cible, et $\xi$ est le rapport entre $\tau_g$ et $\tau_c$, $\tau_c$ étant un temps d'évolution caractéristique de la croûte exprimé comme suit:

$$\tau_c = \frac{\rho S R T_0 e_0}{QE}$$

où $\rho$ est la densité apparente du mélange de matières vitrifiables, S est la surface de la croûte, Q est un débit d'alimentation du mélange de matières vitrifiables dans le four, R est la constante universelle des gaz et E est l'énergie d'activation du mélange de matières vitrifiables.

**2.** Procédé selon la revendication 1, dans lequel w est compris entre 0.01 et 100, de préférence entre 0.1 et 10, par exemple égal à 1.

**3.** Procédé selon l'une quelconque des revendications 1 et 2, ledit procédé comprenant en outre un ensemble d'étapes itérées au cours du fonctionnement du four et comportant :

- une détermination d'au moins une carte de température de la croûte,
- une détection, dans au moins une carte de température de la croûte, de régions comportant des températures supérieures à un seuil donné,

- une mise à jour de l'épaisseur de croûte cible en fonction du résultat de ladite détection.

4. Procédé selon la revendication 3, dans lequel, si au moins une région comportant des températures supérieures audit seuil est détectée, ladite mise à jour comporte une diminution de l'épaisseur de croûte cible.

5. Procédé selon l'une quelconque des revendications 3 et 4, dans lequel, si aucune région comportant des températures supérieures audit seuil n'est détectée, ladite mise à jour comporte une augmentation de l'épaisseur de croûte cible.

6. Procédé selon l'une quelconque des revendications 1 à 5, ledit procédé comportant en outre un ensemble d'étapes itérées au cours du fonctionnement du four et comportant :

- une détermination d'une valeur $e_{bf}$ de l'épaisseur de croûte, considérée comme étant formée du mélange de matières vitrifiables ainsi que de mousse localisée entre le mélange de matières vitrifiables et le bain de verre en fusion,
- une détermination d'une valeur $e_b$ de l'épaisseur du mélange de matières vitrifiables,
- une détermination d'une valeur $e_f$ d'épaisseur de mousse à partir de l'équation suivante :

$$\frac{e_{bf}}{\lambda_{bf}} = \frac{e_b}{\lambda_b} + \frac{e_f}{\lambda_f}$$

où $\lambda_{br}$, $\lambda_b$ et $\lambda_f$ correspondent respectivement à des estimations des conductivités thermiques de la croûte, du mélange de matières vitrifiables et de la mousse,
- une comparaison de la valeur $e_f$ d'épaisseur de mousse avec un seuil donné,
- si la valeur $e_f$ d'épaisseur de mousse devient supérieure audit seuil, une interruption de l'exécution de boucle de contrôle.

7. Procédé selon la revendication 6, dans lequel, si la boucle de contrôle a été interrompue et si l'épaisseur de mousse $e_f$ est inférieure audit seuil, une reprise de la boucle de contrôle.

8. Produit programme d'ordinateur comportant des instructions qui, lorsque que le programme est exécuté par au moins un processeur, conduisent ledit au moins un processeur à mettre en œuvre les étapes d'un procédé selon l'une quelconque des revendications 1 à 7.

9. Support d'enregistrement lisible par un ordinateur sur lequel est enregistré un programme d'ordinateur selon la revendication 8.

10. Système de contrôle d'un four verrier électrique à voûte froide, ledit système comportant des moyens configurés pour mettre en œuvre un procédé de contrôle selon l'une quelconque des revendications 1 à 7.

11. Système de fusion de verre comportant un four verrier électrique à voûte froide ainsi qu'un système de contrôle selon la revendication 10.

**FIG. 1**

SYS_M

SYS_C

ACQ — D_DATA

130    150    130    100

110    113

112    140

111    120

**FIG. 2**

D_DATA

5    2    3
            PROG
    4    1

## FIG. 3

## FIG. 4

**FIG. 5**

**FIG. 6**

## FIG. 7

**FIG. 8**

## FIG. 9

# FIG. 10

ENS_2

ACQ: DET $e_{bf}$ — G10

ACQ: DET $e_b$ — G20

D_DATA : DET $e_f$ — G30

D_DATA :
COMP $e_f$, TH_F — G40

$e_f$ < TH_F     $e_f$ > TH_F

G60                   G50

D_DATA : REACT     D_DATA : DEACT

ACQ: DET $e_b$ — E10

ACQ: TX $e_b$ — E20

D_DATA : RX $e_b$ — E30

D_DATA : DET ε — E40

D_DATA : DET COM_P — E50

D_DATA : TX COM_P — E60

25

**FIG. 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4149022 A

- EP 23169216 A

**Non-patent literature cited in the description**

- Electric Melting of Crystal Glass. **REYNOLDS A.** Power Engineering Journal. Institution of Electrical Engineers, 01 September 1989, vol. 3, 281-288